Europäisches Patentamt

European Patent Office

Office européen des brevets

(19)

(11) Veröffentlichungsnummer : **0 037 371**
**B1**

(12) **EUROPÄISCHE PATENTSCHRIFT**

(45) Veröffentlichungstag der Patentschrift :
26.10.83

(21) Anmeldenummer : 81810052.1

(22) Anmeldetag : 20.02.81

(51) Int. Cl.³ : **B 23 B 31/30**

(54) Umlaufende Druck-Hohlspanneinrichtung.

(30) Priorität : 28.03.80 EP 80810106

(43) Veröffentlichungstag der Anmeldung :
07.10.81 Patentblatt 81/40

(45) Bekanntmachung des Hinweises auf die Patenterteilung : 26.10.83 Patentblatt 83/43

(84) Benannte Vertragsstaaten :
AT BE CH DE FR GB IT LI NL SE

(56) Entgegenhaltungen :
CH A 417 277
DE A 1 552 506
DE A 1 650 813
DE A 1 925 043
DE A 2 124 918
DE C 491 826
US A 2 782 044
US A 2 886 007
US A 3 837 716

(73) Patentinhaber : **Jos. Habegger AG**
**Hauptstrasse 31**
**CH-2554 Meinisberg (CH)**

(72) Erfinder : **Grünig, Kurt**
**Tulpenweg 4**
**CH-2543 Lengnau (CH)**

(74) Vertreter : **Seehof, Michel et al**
**c/o AMMANN PATENTANWAELTE AG BERN**
**Schwarztorstrasse 31**
**CH-3001 Bern (CH)**

Jouve, 18, rue St-Denis, 75001 Paris, France

## Umlaufende Druck-Hohlspanneinrichtung

Die vorliegende Erfindung bezieht sich auf eine umlaufende Druck-Hohlspanneinrichtung, mit einem vom Druckmedium beaufschlagten Kolbenteil, der nur längsverschiebbar und nicht drehbar ist, wobei in seinem Inneren ein umlaufendes axial abgestütztes Teil angeordnet ist, das auf ein die Spannzange oder dergleichen betätigendes Betätigungsrohr wirkt.

Eine solche Einrichtung ist aus der CH-A-417 277 bekannt. Während diese Einrichtung, bei welchem sich das beaufschlagte Kolbenteil nicht dreht, eine geringe Lecökrate aufweist, ist sie weder für hohe Drehzahlen noch für grosse Spannkräfte geeignet. Ausserdem ist bei dieser Konstruktion nur eine Spannrichtung möglich. Wenn in der anderen Richtung gespannt werden soll, wirkt die volle Spannkraft auf die Wälzlager, wodurch deren Lebensdauer wesentlich herabgesetzt wird.

Aus der DE-C-491 826 ist ferner eine Vorrichtung zur Hubuntersetzung bekannt, die vornehmlich für Mikroskope und photographische Apparate gedacht ist.

Es ist nun Aufgabe der vorliegenden Erfindung eine Druck-Hohlspanneinrichtung anzugeben, die bei geringster Lecökrate sehr hohe Drehzahlen, grosse Spannkräfte und geringe Leistungsverluste aufweist und für die kein Oelkühler oder Wärmeaustauscher erforderlich ist.

Eine weitere Aufgabe ist es, eine Spanneinrichtung anzugeben, die bei der pneumatischen Ausführung mit gewöhnlicher Betriebsdruckluft betrieben werden kann.

Eine Spanneinrichtung, die diese und weitere Aufgaben löst, ist in den Ansprüchen beschrieben.

Die Erfindung wird nun im folgenden anhand einer Zeichnung von Ausführungsbeispielen näher erläutert werden.

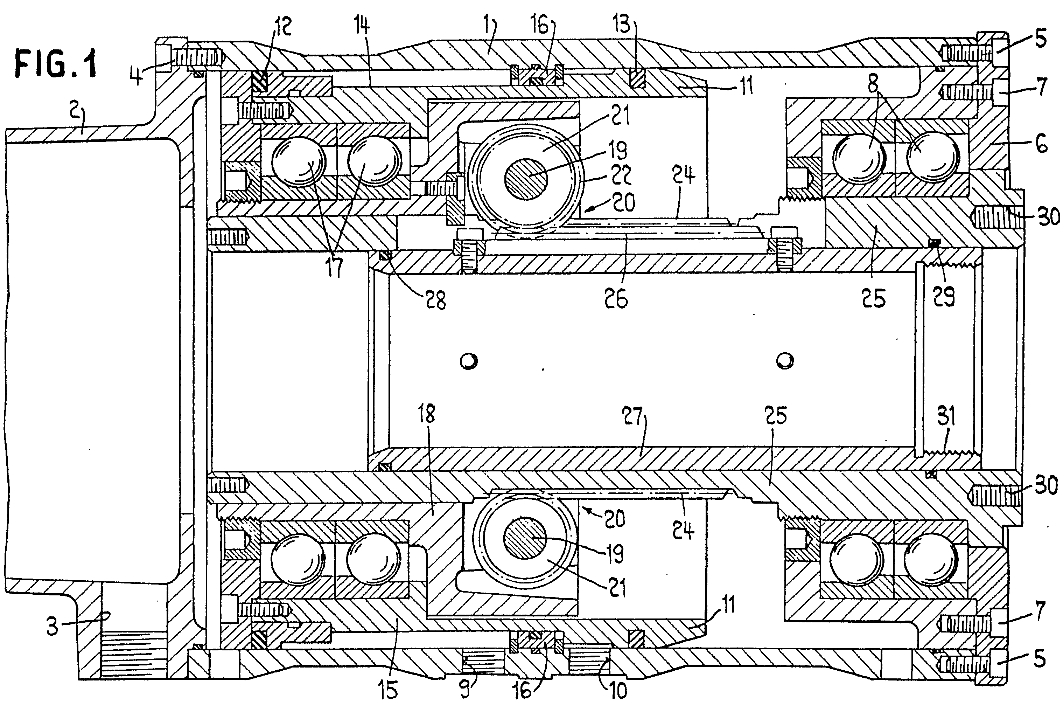

Figur 1 zeigt im Längsschnitt eine erfindungsgemässe Spanneinrichtung,

Figur 2 zeigt einen Querschnitt der Einrichtung gemäss Figur 1 und

Figur 3 zeigt eine Ausführungsvariante.

Man erkennt die Gehäusewand 1, an welcher auf einer Seite, auf der vorliegenden Zeichnung links, ein Kühlmittelauffanggehäuse 2 mit einem Anschluss 3 für die Kühlmittelrückführung mittels Schrauben 4 befestigt ist. Am andern Ende der Gehäusewand ist mittels Schrauben 5 ein Flansch 6 befestigt, an welchem über Schrauben 7 ein Kugellagergehäuse für ein Kugellagerpaar 8 befestigt ist. In der Gehäusewand, in der Zeichnung unten, befinden sich zwei Druckmediumeinlässe 9 und 10, wobei das Druckmedium in vorliegendem Fall Oel ist. Das Drucköl wirkt auf ein Kolbenteil 11, das an beiden Enden Dichtungen 12 und 13 aufweist. Das Kolbenteil 11 ist nur längsverschiebbar und weist eine druckaufnehmende abgestufte Druckfläche 14 auf, wodurch ein Druckzylinder gebildet wird, der an seinen beiden Enden eine geringere Dicke aufweist. Zwischen den beiden Einlässen 9 und 10 befindet sich eine dichtende Packung 16, wodurch der Druckzylinder unterteilt wird und ein doppelwirkender Zylinder 15 entsteht, mit dem es möglich ist, das Kolbenteil vor- oder rückwärts zu bewegen. Dadurch kann dann entweder gezogen oder gedrückt werden. Das Kolbenteil 11 weist an seinem hinteren Ende ein Kugellagerpaar 17 auf.

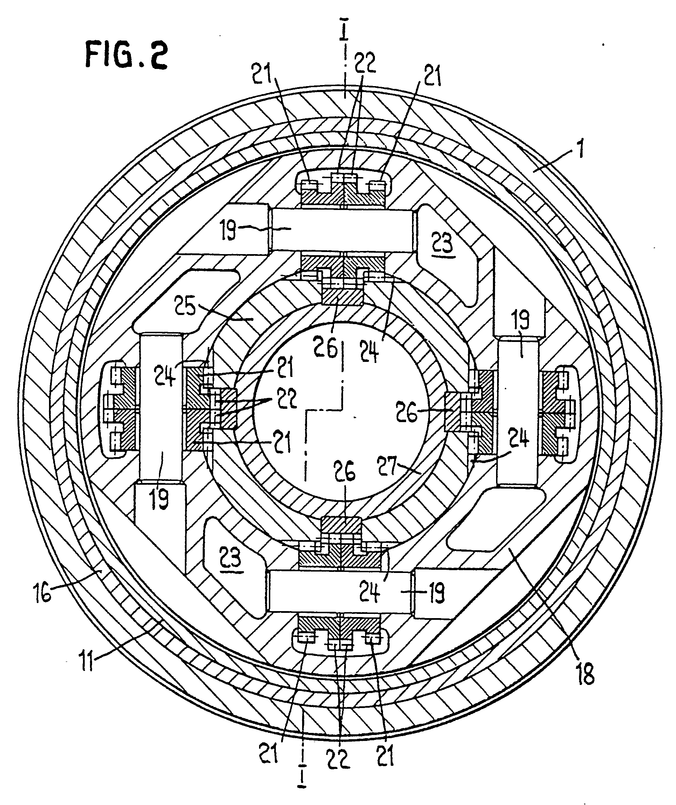

Durch die beiden Kugellagerpaare 8 und 17 ist ein umlaufendes Teil 18 geführt, das einen rechteckigen Querschnitt mit abgerundeten Ecken aufweist (siehe Figur 2). Aus Figur 2 geht auch hervor, dass in den Ecken dieses Gusstücks Achsen 19 angeordnet sind, auf denen die Zahnräder eines Differential-Zahnstangengetriebes oder geradliniges Planetengetriebes 20 angeordnet sind. Die Zahnräder des Getriebes 20 bestehen aus dem äusseren Zahnräderpaar 21 mit beispielsweise siebzehn Zähnen und dem inneren Zahnrad 22 mit beispielsweise zwanzig Zähnen, das einen grösseren Durchmesser hat. Dadurch entsteht ein Uebersetzungsverhältnis von 17 : 3 = 1 : 5 2/3. Die quadratische anstatt zylindrische Form des umlaufenden Teils 18 bewirkt nicht nur eine Gewichtsreduktion, sondern wirkt auch der Verformung entgegen, die bei Einwirkung von radialen Kräften auf die Zahnräder verursacht wird. Ausserdem erkennt man anschliessend an die Achsenlagerung Ausnehmungen 23, die ebenfalls der Gewichtserparnis dienen. Das äussere Zahnradpaar 21 wirkt auf ein Zahnstangenpaar 24, das auf einem in Längsrichtung nicht verschiebbaren Führungsrohr 25 angeordnet ist. Das innere Zahnrad 22 wirkt durch Schlitze im Führungsrohr 25 auf eine Zahnstange 26, die am Betätigungsrohr 27 befestigt ist. Zwischen dem Führungs- und Betätigungsrohr sind zwei Dichtungen 28 und 29 angeordnet. Am Führungsrohr sind vorne Bohrungen 30 angebracht, an die ein Flansch oder dergleichen zur Verbindung mit der Maschinenspindel befestigt werden kann. Das Betätigungsrohr 27 trägt vorne ein Gewinde 31, an die ein Zugrohr oder ein anderes Uebergangsstück geschraubt werden kann, um das Betätigungsrohr mit einer Spannzange oder mit einem Spannfutter oder dergleichen zu verbinden.

Wie aus obiger Beschreibung hervorgeht, bewirkt ein Einlassen des Drucköls durch den Einlass 10 ein Verschieben des Kolbenteils 11 nach rechts und beim Abrollen der Zahnräder auf dem Zahnstangenpaar ein Spannen des Betätigungsrohres, d. h. eine Bewegung nach links, wobei diese Bewegung im Verhältnis von 1 : 5 2/3 untersetzt ist und damit die Kraftübertragung um den gleichen Faktor übersetzt wird. Dadurch ist es möglich, mit einer relativ kleinen Betätigungskraft, z. B. 8 000 N, welche auch bei hohen Drehzahlen problemlos mittels Kugellager übertragen werden kann, eine grosse Spannkraft, z. B. 45'000 N zu erzeugen.

Dadurch, dass das Druckmittel nicht über einen Rotationsübertrager zugeführt wird, kann die Leckrate verschwindend klein gemacht werden. Weil nur während dem Spannvorgang Druckmittel benötigt wird, kann in der Regel das bestehende Hydrauliksystem der Maschine zur Betätigung verwendet werden. Ausserdem entsteht durch die Lagerung des drehenden Teils in Kugellager und dadurch, dass das Drucköl nicht durch drehende Teile erwärmt wird, eine weitaus geringere Erwärmung und dadurch eine weitaus geringere Leistungsabsorption. Berechnungen und Messungen haben ergeben, dass die absorbierte Leistung nicht von der Oeltemperatur abhängt und je nach Temperatur 1/7 bis 1/3 derjenigen herkömmlicher Spannzylinder ausmacht. Ausserdem ist durch diese Bauweise kein Mindestdruck vorgeschrieben, um die Schmierung zu gewährleisten.

Infolge der geringeren Erwärmung kann eine grössere thermische Stabilität der Maschine erzielt werden, wobei diese Vorteile insbesondere bei hohen Drehzahlen in Erscheinung treten.

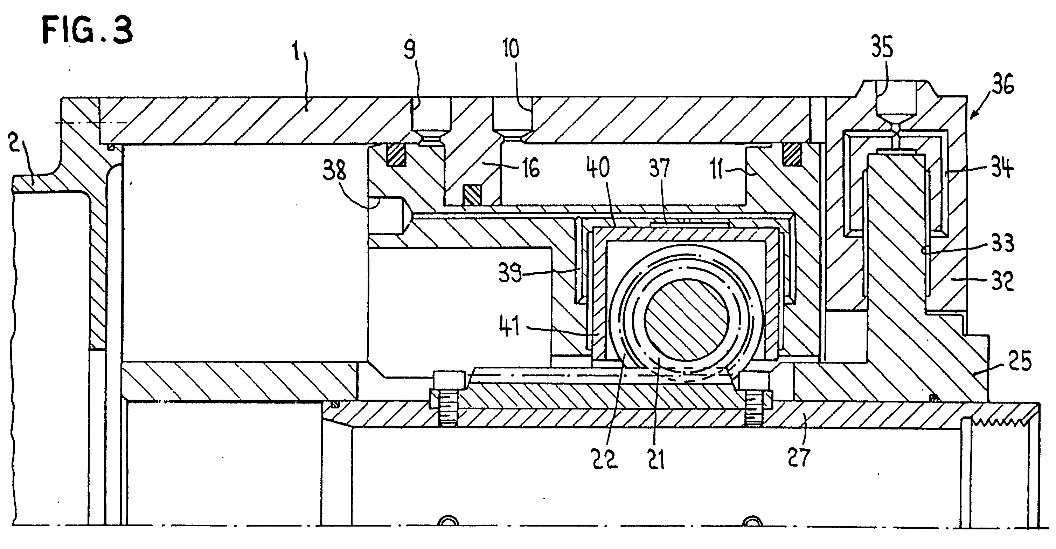

Werden besonders hohe Drehzahlen erforderlich, ist es zweckmässig, die Lagerung noch weiter zu verbessern und die Ausführungsform gemäss Figur 3 mit aerostatischer Lagerung zu verwenden, wobei das umlaufende Teil 40 zylindrisch ist. In Fig. 3 sind die gleichen Teile gleich bezeichnet, wobei man die Gehäusewand 1 mit dem Kühlmittelauffanggehäuse 2 und die beiden Druckmediumeinlässe 9 und 10 erkennt. Das dem Kühlmittelauffanggehäuse 2 entgegengesetzte Ende von Gehäuse 1 ist als ringförmiger Flansch 32 ausgebildet, der eine innere, ringförmige Lagerkammer 33 mit Zuleitungen 34 und Lufteinlass 35 aufweist. Dieses Luftlager 36 ersetzt das Kugellagerpaar 8 der vorhergehenden Ausführung. Das Kugellagerpaar 17 am Kolbenteil 11 des vorhergehenden Beispiels wird durch das aerostatische Lager 37 mit dem Lufteinlass 38 und den Luftleitungen 39 ersetzt. Das umlaufende Teil 40 kann durch die Verwendung von Luftlagern verkürzt und dadurch auch erleichtert werden. Die vier Getriebe 20 sind symmetrisch innerhalb eines Lagergehäuses 41 angeordnet, dessen Aussenseite Teil des Luftlagers 37 ist. Die übrigen Teile sind die gleichen wie im vorhergehenden Beispiel und auch die Funktionsweise ist die gleiche. Als Druckmittel für die Lager verwendet man zweckmässigerweise Luft, doch ist auch ein anderes Gas verwendbar.

Die Erfindung ist nicht auf diese Ausführungsform beschränkt. So kann das umlaufende Teil 18 je nach Grösse der Einrichtung einen 3-, 6- oder viel-eckigen oder einen runden Querschnitt aufweisen, mit der entsprechenden Anzahl Getrieben. Bei zylindrischen umlaufenden Teilen ist die Anzahl der Getriebe nach der Grösse der Einrichtung zu wählen. Auch kann das Uebersetzungsverhältnis andere Werte annehmen, beispielsweise in einem Bereich von 1 : 3 bis 1 : 30, vorzugsweise in einem Bereich von 1 : 4 bis 1 : 10. Ausserdem kann das äussere Zahnradpaar einen grösseren Durchmesser als das innere Zahnrad aufweisen, wodurch die Bewegungsrichtung zwischen dem umlaufenden Teil 18 und dem Betätigungsrohr 27 umgekehrt wird. Ferner ist es nicht notwendig, nur einen doppelwirkenden Zylinder vorzusehen, es kann auch für jedes Differentialgetriebe ein doppelwirkender Zylinder vorgesehen sein. Dies insbesondere dann, falls nicht Drucköl als Druckmedium verwendet wird sondern Druckluft, mit welchem die Spanneinrichtung ebenfalls betrieben werden kann. Dabei kann normalerweise vorhandene Betriebsdruckluft verwendet werden.

Bei der Verwendung eines Sicherheitsventils ist es auch bei strengen Sicherheitsvorschriften nicht notwendig, für den Betrieb dieser Spanneinrichtung eine getrennte Hydraulik zu verwenden.

## Ansprüche

1. Umlaufende Druck-Hohlspanneinrichtung, mit einem vom Druckmedium beaufschlagten Kolbenteil (11), der nur längsverschiebbar und nicht drehbar ist, wobei in seinem Inneren ein umlaufendes, axial abgestütztes Teil (18, 40) angeordnet ist, das auf ein die Spannzange oder dergleichen betätigendes Betätigungsrohr (27) wirkt, dadurch gekennzeichnet, dass das umlaufende Teil (18, 40) ein Differential-Zahnstangengetriebe (20) aufweist, wobei am umlaufenden Teil Achsen (19) symmetrisch angeordnet sind, die je ein äusseres Zahnradpaar (21) und ein inneres Zahnrad (22) mit grösserem (bzw. kleineren) Durchmesser und grösserer (bzw. kleinerer) Anzahl Zähne aufweisen, wobei das äussere Zahnradpaar auf ein Zahnstangenpaar (24) an einem im umlaufenden Teil angeordneten Führungsrohr (25) und das innere Zahnrad durch Schlitze im Führungsrohr auf eine Zahnstange (26) am Betätigungsrohr (27) wirkt.

2. Einrichtung nach Anspruch 1, dadurch gekennzeichnet, dass der umlaufende Teil (18) durch zwei Wälzlagergruppen (8, 17) geführt ist und einen quadratischen Querschnitt mit abgerundeten Ecken aufweist, in welchen je ein Differentialgetriebe angeordnet ist.

3. Einrichtung nach Anspruch 1, dadurch gekennzeichnet, dass das umlaufende Teil (4) durch zwei aerostatische Lager (36, 37) geführt und rund ist und vier symmetrisch angeordnete Differential-Zahnstangengetriebe (20) aufweist.

4. Einrichtung nach einem der Ansprüche 1 bis 3, dadurch gekennzeichnet, dass das Uebersetzungsverhältnis des Differential Zahnstangengetriebes in einem Bereich von 1 : 3 bis 1 : 30, vorzugsweise : 1 : 3 bis 1 : 10, liegt.

5. Einrichtung nach einem der Ansprüche 1 bis 4, dadurch gekennzeichnet, dass der durch die behälterwand (1) und Kolbenteil (11) gebildete Druckzylinder als doppelwirkender Zylinder (15) ausgebildet ist.

6. Einrichtung nach einem der Ansprüche 1, 2, 4, 5, dadurch gekennzeichnet, dass der umlaufende Teil einen runden oder drei-, sechs- oder vieleckigen Querschnitt aufweist und symmetrisch oder in jeder abgerundeten Ecke ein Differential-Zahnstangengetriebe angeordnet ist.

7. Einrichtung nach einem der Ansprüche 1 bis 6, dadurch gekennzeichnet, dass jedem Getriebe ein doppelwirkender Druckzylinder zugeordnet ist.

## Claims

1. Rotary hollow pressure gripping device in which a pressure medium acts upon a piston (11) which slides only longitudinally and is not rotating and in the interior of which is disposed an axially supported rotary part (18, 40) which acts on a tube (27) actuating a collet chuck or similar, characterized in that the rotary part (18, 40) comprises a racked bar differential drive (20) having axles (19) symmetrically arranged thereon, each axle comprising a pair of outer gearwheels (21) and an inner gearwheel (22) with a smaller (respectively a greater) diameter and a smaller (respectively a greater) number of teeth, said pair of outer gearwheels acting upon a pair of racked bars (24) of a guide tube (25) arranged in the rotary part and the inner gearwheel acting upon a racked bar (26) of the actuating tube through slots in the guide tube.

2. Device according to claim 1, wherein the rotary part is guided by two groups of roller bearings and has a square cross section with radiused corners in each of which is arranged a differential gear.

3. Device according to claim 1, wherein the rotary part (40) is cylindric and guided by two aerostatic bearings (36, 37) and has four symmetrically arranged racked bar differential drives (20).

4. Device according to one of the claims 1 to 3, wherein the transmission ratio of the racked bar differential drive is located in a range from 1 : 3 to 1 : 30, preferably from 1 : 3 to 1 : 10.

5. Device according to one of the claims 1 to 4, wherein the pressure cylinder formed by the housing wall (1) of the device and the piston (11) is formed as a double-acting cylinder.

6. Device according to one of the claims 1, 2, 4, 5, wherein the rotary part has a circular or triangular or hexagonal or polygonal cross-section and has a racked bar differential drive arranged symmetrically or in each radiused corner.

7. Device according to one of the claims 1 to 6, wherein each drive has a double-acting pressure cylinder associated therewith.

## Revendications

1. Dispositif rotatif creux de serrage à pression dans lequel un milieu de pression agit sur une partie de piston (11) qui n'est déplaçable que longitudinalement et non pivotante et à l'intérieur de laquelle une partie rotative (18, 40) supportée axialement est disposée pour agir sur un tube d'actionnement (27) d'une pince de serrage ou similaire, caractérisé en ce que la partie rotative (18, 40) comprend un engrenage à crémaillère différentiel (20) avec des arbres (19) disposés symétriquement comprenant chacun une paire de roues dentées extérieures (21) et une roue dentée intérieure (22) avec un plus petit (respectivement un plus grand) diamètre et un plus petit (respectivement un plus grand) nombre de dents, la paire de roues dentées extérieures agissant sur une paire de crémaillères (24) d'un tube de guidage (25) disposé dans la partie rotative et la roue dentée intérieure agissant sur une crémaillère (26) du tube d'actionnement (27) à travers des fentes dans le tube de guidage.

2. Dispositif selon la revendication 1, caractérisé en ce que la partie rotative (18) est guidée par deux groupes de paliers à roulement (8, 17) et qu'elle est de section quadrangulaire avec des angles arrondis dans chacun desquels est disposé un engrenage différentiel.

3. Dispositif selon la revendication 1, caractérisé en ce que la partie rotative (40) est circulaire, guidée par deux paliers aérostatiques (36, 37) et qu'elle comprend quatre engrenages à crémaillère différentiels (20) disposés symétriquement.

4. Dispositif selon l'une des revendications 1 à 3, caractérisé en ce que le rapport de transmission de l'engrenage à crémaillère différentiel est dans un domaine compris entre 1 : 3 et 1 : 30, de préférence entre 1 : 3 et 1 : 10.

5. Dispositif selon l'une des revendications 1 à 4, caractérisé en ce que le cylindre de pression formé par la paroi (1) du dispositif et la partie de piston (11) est conçu comme un cylindre à double effet (15).

6. Dispositif selon l'une des revendications 1, 2, 4, 5, caractérisé en ce que la partie rotative est de section circulaire ou triangulaire ou hexagonale ou polygonale et en ce qu'un engrenage à crémaillère différentiel est disposé symétriquement ou dans chaque angle arrondi.

7. Dispositif selon l'une des revendications 1 à 6, caractérisé en ce qu'un cylindre de pression à double effet est attribué à chaque jeu d'engrenages.

FIG.1

0 037 371

FIG.2

# FIG.3